# EUROPEAN PATENT SPECIFICATION

(11) **EP 2 386 076 B1**
(45) Date of publication and mention of the grant of the patent: **27.03.2013**
(21) Application number: 10700242.0
(22) Date of filing: 12.01.2010
(51) Int. Cl.: E02F 3/90

(54) **METHOD AND DEVICE FOR CONTROLLING A MOBILE GROUND WORKING DEVICE**
VERFAHREN UND EINRICHTUNG ZUM STEUERN EINER MOBILEN BODEN-ARBEITSEINRICHTUNG
PROCÉDÉ ET DISPOSITIF DE COMMANDE D'UN ENGIN MOBILE DE TERRASSEMENT

(30) Priority: 12.01.2009 BE 200900013
(43) Date of publication of application: 16.11.2011
(73) Proprietor: Dredging International N.V., 2070 Zwijndrecht (BE)
(72) Inventor: VERBOOMEN, Bart, Peter, B-9521 Sint-Lievens-Houtem (BE)
(74) Representative: Langenhuijsen, Bastiaan Wilhelmus Herman
(86) International application number: PCT/EP2010/050275
(87) International publication number: WO 2010/079232

(56) References cited:
- DE-A1- 3 927 299
- US-A- 5 631 658
- US-A- 5 964 298

## Description

The present invention relates to a method and device for controlling a mobile ground working device such as a trailing suction hopper dredger, bulldozer or grass mower with collecting box. The invention likewise relates to a computer program comprising program instructions for having a computer perform the method. The invention also relates to a computer adapted to run such a computer program.

Taken as example for the purpose of elucidating the invention is a ground mass with a determined height profile. Use can be made of a bulldozer in order to impart a desired profile to the ground mass. Such a ground working device is controlled in known manner by an operator, wherein the operator determines the manner in which the ground is provided with the desired profile, in other words which route the bulldozer for instance will take, at which speed the bulldozer will operate and/or which height the blade of the bulldozer will occupy at a determined position. It will be apparent that a specific operator will make wholly different choices than another operator, wherein great differences in efficiency will result. The drawback of the known method is therefore that it has a relatively low efficiency.

A similar problem occurs in the use of a grass mower provided with collecting box, wherein the mown grass is collected in the collecting box, and the full collecting box must subsequently be emptied at a discharge location in the garden set aside for this purpose. It would be desirable if the operator of the grass mower could optimize the route he/she travels and the setting of the machine (height of the blade, mowing width, travel speed) so that a route is followed which starts and ends at the discharge location, wherein the collecting box of the grass mower just becomes full as the discharge location is reached, and so there is no "unproductive distance" (travelling with full box without grass being mown).

US 5,631,658 discloses a method for controlling a mobile ground working device, such as a track-type tractor. A current and desired site model of the height profile of the ground are compared by a computer and supplemented with information relating to the current position of the tractor. The signals representing the difference between the current and desired site model are supplied to automatic machine controls for operation of the tractor. Electrohydraulic controls can provide an operator assist to minimize machine work and limit the manual control if the operator's proposed action would, for example, overload the machine."

US 5,964,298 discloses an integrated earth contouring system that uses a positioning system such as a GPS system to track the location of an earthmover on a work site, and a sensor for determining the position of the blade of the earthmover relative to the work site. A display device visible to the driver displays a difference between an existing surface contour and a desired surface contour of the work site, which display is continuously updated as a result of the ongoing action of the earthmover. The driver can act on the basis of the data presented to him on the display.

DE 3927299 A1 discloses a method for determining the optimum route of a device, in particular an aircraft. Topographical information of the area covered between a starting point and a final destination is collected in a database and a criterion set, such as the risk involved in the flight, the time for the flight, or the fuel consumed by the flight. An optimum route is then calculated which minimizes the criterion set.

The above stated problems occur particularly in the dredging of ground under water by means of a dredging vessel such as a trailing suction hopper dredger. A trailing suction hopper dredger comprises a drag head attached to a drag pipe and having an adjustable visor provided with teeth. During navigation the drag head is dragged underwater over the bottom, wherein soil is loosened through the action of the teeth and is suctioned away via a suction conduit to a well present on the trailing suction hopper dredger. Such a trailing suction hopper dredger has a limited load capacity and, because of the dimensions thereof, is not easy to manoeuvre. The ground for working (dredging) moreover lies underwater, which does not make matters any simpler. The operator of the trailing suction hopper dredger (the helmsman of the dredging vessel or the operator (or automatic control) of the suction pipe of the dredging vessel) has the task of determining the route of the trailing suction hopper dredger, wherein a large number of variables must be taken into account such as the navigating speed and navigating direction, the setting of the drag head (position of the visor, suction capacity and other parameters).

The present invention has for its object to provide a method and device for controlling a mobile ground working device, such as a trailing suction hopper dredger, bulldozer or grass mower with collecting box, with an increased efficiency relative to the known method. Efficiency is understood in the context of this application to mean the volume of ground worked per unit of time and per unit of power.

The invention has for this purpose the features as stated in claim 1. Particularly provided is a method for controlling a mobile ground working device, this method being characterized in that it comprises at least the steps, proceeding under the control of a central computer via a digital network, of A) presetting an optimum criterion; B) collecting information relating to the current state of the ground; C) collecting information relating to the current state of the ground working device, including at least its position; and D) calculating the control of the ground working device at which the optimum criterion is minimized, wherein the optimum criterion relates to the route which the ground working device has to cover in order to convert the current state of the ground to a desired state of the ground and/or the ground working device loads soil, and the optimum criterion relates to the distance over which the ground working device has to be displaced in full state to a discharge location for the load.

Using the invented method ground can be worked with an increased efficiency compared to the known method.

A preferred embodiment of the method according to the invention is characterized in that calculation of the control comprises of at least calculating the route of the ground working device. If ground is for instance being excavated with a trailing suction hopper dredger, the trailing suction hopper dredger, and in particular the drag head thereof, will then follow a path according to the present embodiment variant which complies with a minimum value of the optimum criterion. Such an optimum criterion can for instance include the overall dredging time, whereby using the invented method the fastest route is obtained, or the overall length of the route, whereby using the invented method the shortest route is therefore obtained. It is however also possible to select as optimum criterion the avoidance of track formation. Tracks can be formed to the sides of the trailing suction hopper dredger in that soil is pushed sideways by the drag head. Local shallows are hereby created which in the known method are removed afterward in unproductive manner. The method according to the invention makes it possible to define the route of the drag head such that the tracks are dredged with greater efficiency. The highest level of production can also be selected as optimum criterion. With such a choice the method according to the invention will define the route of the drag head such that production is maximal in the shortest possible time.

Another preferred embodiment of the method according to the invention has the feature that the information relating to the current state of the ground comprises the height profile of the ground. An initial profile can be determined prior to ground working, for instance by taking soundings of the water depth. Such soundings are per se known and can for instance be measured by utilizing sound waves. Since according to the invention information is known at a determined point in time relating to the route of the ground working device prior thereto, the height profile for this point in time can be calculated for a given working capacity. This height profile is thus continuously modified as a result of the dredging.

It is advantageous here to characterize the method according to the invention in that the information relating to the height profile of the ground is visualized digitally for the operator of the ground working device. Such a digital image of the height profile of a ground mass is per se known and is also referred to with the term Digital Terrain Modelling (DTM).

Yet another embodiment of the method according to the invention is characterized in that the current position of the ground working device is determined by a GPS system. Such a GPS system, particularly for dredging vessels, is per se known and also referred to with the term Dynamic Positioning/Dynamic Tracking (DPDT) system.

A further preferred embodiment of the method according to the invention has the feature that the information relating to the current state of the ground working device comprises the working depth and width.

A further preferred embodiment of the method according to the invention has the feature that the information relating to the current state of the ground working device comprises the quantity of worked ground.

The method according to the invention is particularly suitable for controlling a dredging vessel, a bulldozer or a grass mower, and preferably a trailing suction hopper dredger.

The invention likewise relates to a device for controlling a mobile ground working device. The device according to the invention comprises a central computer which is connected via a digital network to the ground working device and which is adapted to perform a method at least comprising the steps of:
A) presetting an optimum criterion;
B) collecting information relating to the current state of the ground;
C) collecting information relating to the current state of the ground working device, including at least its position;
D) calculating the control of the ground working device at which the optimum criterion is minimized.

The computer is loaded for this purpose according to the invention with a computer program which comprises program instructions for performing the method. The advantages of such a device have already been elucidated with reference to the above discussed method and will not be repeated here. The device according to the invention collects the information via the digital network in the form of incoming signals which come from instruments, such as a GPS system, a DTM or a DPDT system, incorporated in the network as discussed above. These signals are processed as described below in the present application, after which the device transmits control signals via the digital network to the ground working device for the purpose of controlling this latter, or wherein information is shown on a digital screen, on the basis of which an operator of the ground working device carries out control thereof. The computer calculates the control, which preferably comprises at least that route of the ground working device which minimizes the optimum criterion (the 'optimum' route). The thus calculated control is continuously adjusted by the computer as a function of the changes recorded by the instruments. According to the invention the computer calculation takes into account, among other factors, the position, the processing rate and the technical possibilities of the trailing suction hopper dredger or bulldozer, and this preferably controls a trailing suction hopper dredger or bulldozer by modifying for instance the position of the visor, the position of the drag head, the height of the adjusted bulldozer blade and so forth.

The invention will now be further elucidated on the basis of the exemplary embodiments shown in the following figures, without otherwise being limited thereto. Herein:
figure 1 shows schematically an embodiment of a device according to the invention;
figure 2 shows a schematic top view of a possible representation of information relating to the current state of the ground;
figure 3 is a schematic front view of the drag head of a trailing suction hopper dredger;
figure 4 is a schematic representation of a step in the determining of an optimum route for a trailing suction hopper dredger;
figure 5 shows a schematic representation of the output of a calculation performed by the device according to the invention; and finally
figure 6 shows a schematic representation of the output of figure 5 after one passage of a trailing suction hopper dredger.

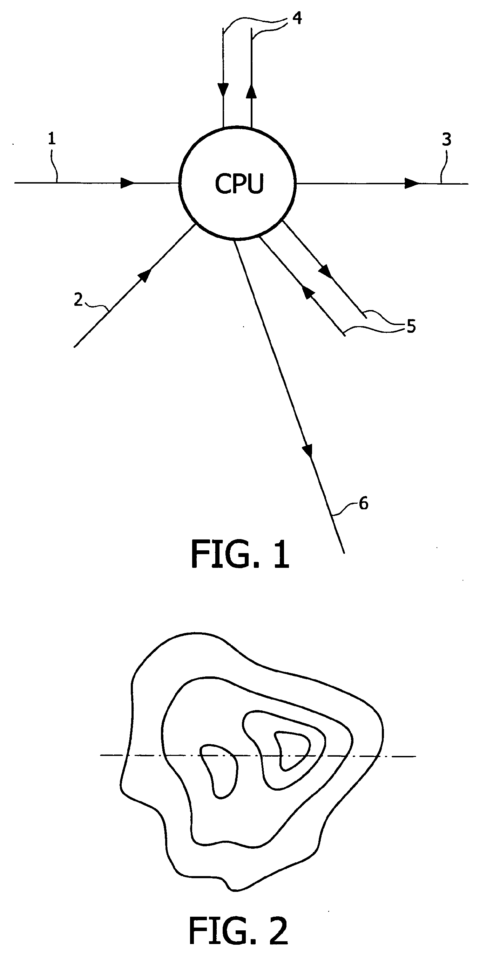

Referring to figure 1, a possible embodiment is shown of a device for controlling a mobile ground working device such as a trailing suction hopper dredger. The device comprises a computer (CPU) which performs optimizing calculations on the basis of online process information in the form of incoming signals 1 and design data 2, wherein the calculation results in output signals 3, fed-back signals 4, fed-back information 5 and processed information 6.

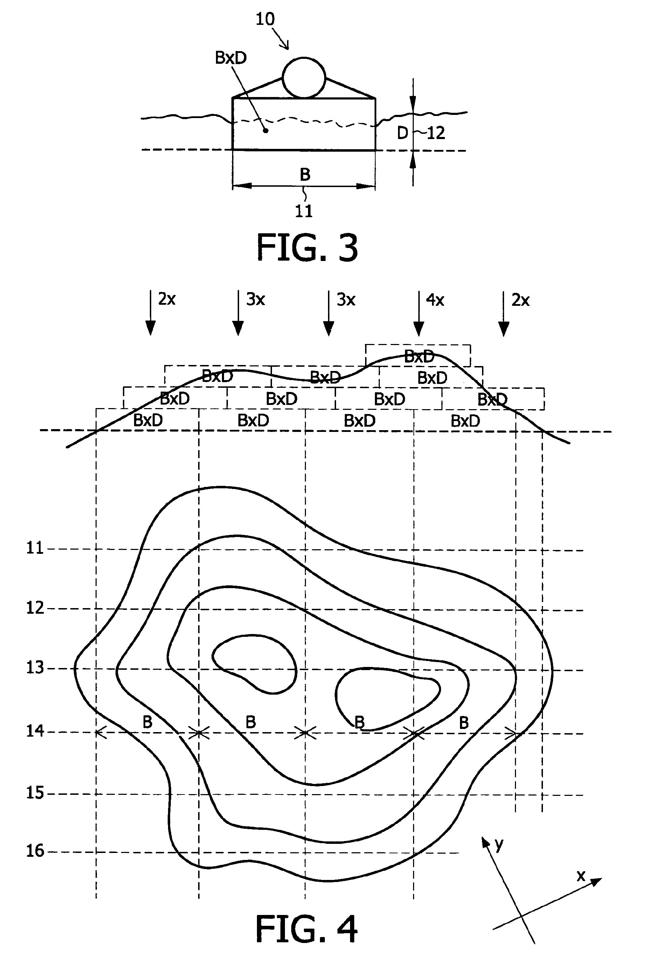

Typical online process information in the form of incoming signals 1 comprises, but is not limited to, the current position of the trailing suction hopper dredger in the form of GPS coordinates, the depth of the drag head (see also figure 3), the position of the visor of the drag head, the status of components of the trailing suction hopper dredger, such as for instance the situation of the suction pump (on/off), the situation of the bin closure (open/closed), the volume of the bin, tidal information, the current state of the bottom in the form of sounding data and other desired process information. Fixed process information comprises the specific characteristics of the trailing suction hopper dredger, such as for instance the power available.

Typical design data 2 comprise, but are not limited to, the height profiles of the ground to be delivered which together define the profile of the ground, and the desired tolerances.

Typical output signals 3 comprise, but are not limited to, the control of the visor of the drag head.

Typical processed (or output) information 6 comprises, but is not limited to, the calculated navigation route of the trailing suction hopper dredger, preferably visualized on a screen in the operator space.

Typical fed-back information 5 comprises, but is not limited to, the current sounding data which together form the current height profile of the ground. This information forms part of the online process information.

Finally, typical fed-back signals 4 comprise, but are not limited to, dynamic tracking, dynamic positioning (DPDT) signals and signals which, if desired, control the automatic dredging control.

Using the device a trailing suction hopper dredger is for instance controlled, this such that it will follow the route which, in the shortest time and consuming the least power, excavates a maximum quantity of soil (in other words, produces the maximum efficiency).

Referring to figure 2, a top view is shown of sounding data which serve as basic information about the zone for dredging. The sounding data are visualized digitally as according to figure 2 in the form of a so-called digital terrain modelling (DTM) on a screen available to the operator of the trailing suction hopper dredger. Volumes can be calculated using the sounding data, as will be elucidated below. The sounding data relate to height information made available to the operator of the dredging vessel in the form of contour lines or a colour pattern (or in any other appropriate manner).

According to the invention an optimum criterion is set prior to the ground working. In the present exemplary embodiment this is the delivery of a horizontal ground profile with the greatest efficiency.

Specified below is a possible method for calculating the control, in this case the route, of the ground working device, in this case the trailing suction hopper dredger, at which the optimum criterion is minimized.

Drag head 10 (figure 3) of the trailing suction hopper dredger can be characterized by a cutting width B and a cutting depth D. The momentary cutting depth is obtained from the incoming signals. The area of removed soil is equal to the product of B x D.

The sounding data from the DTM information is subdivided as according to figure 4 into a number of transverse profiles 11 to 16, which are defined relative to an X-Y coordinate system. In the given example the transverse profiles 11-16 run substantially perpendicularly of the dragging direction of the trailing suction hopper dredger, although this is not essential. A unit step is defined as the intermediate distance between two successive transverse profiles 11-16. The computer then calculates via the DTM information in how many movements (passages) per unit step the ground can be removed. In the embodiment shown here this is the number of areas B x D per transverse profile. The result of this calculation is shown for transverse profile 13 at the top of figure 4, and comprises a number of passages (shown as nx, with n = 2, 3 or 4) per pass of the drag head. A pass of the drag head is shown schematically in figure 4 as a rectangle with area B x D. This rectangle also represents the area of the ground removed by one drag head passage.

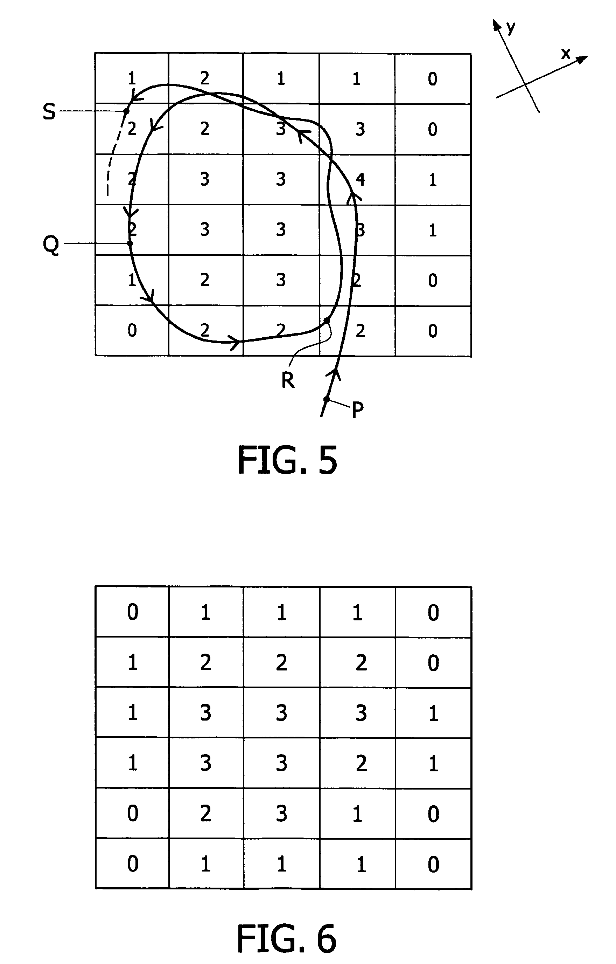

Repetition of this procedure results in a number of calculated passages of the drag head for all transverse profiles. The DTM information is in this way converted to the form of a matrix (or other usable form), wherein the position of each matrix block is defined by the coordinates (X,Y) of the relevant matrix block, and this matrix block comprises the number of passages of the drag head necessary to obtain the desired height profile (in the present case a horizontal profile at a determined desired depth). An example of such a matrix is shown in figure 5.

In the same manner as if the matrix were a street plan, but then in three dimensions, the computer calculates in a following step an optimum route over the matrix (shown in figure 5 as a curved line with arrow indicating the forward direction of the drag head). This optimum route is determined by maximizing the optimum criterion, in the present example the efficiency. This efficiency - and therefore also the calculated optimum route - depends on a number of input data obtained from the instrumentation already discussed above. Typical input data comprise the depth of the drag head, the position of the visor, the dredging status, the readout of the automatic dredging control and of the DPDT system and so forth (non-limitative). The relation between the efficiency and the input data can be determined on theoretical grounds or experimentally, and the manner in which this takes place is per se known to the skilled person.

An appropriate algorithm is applied for the purpose of determining the extreme value (minimum, maximum) of the optimum criterion. Such algorithms are per se known and are not further discussed here.

The route shown in figure 5 displays a first passage which starts at position P and leads via position Q to position R. Because at position R the drag head re-enters a matrix block already visited earlier, a second passage of the drag head begins at this position R. This leads from position R to position S and further. Each time the drag head enters a determined matrix block, the number of passages required is reduced by one and the optimum route is redefined.

The effect of the algorithm can be loosely described as follows. The matrix represents a kind of "tower", from which the algorithm breaks off "blocks" with a cross-sectional area equal to B x D, starting here at the top as a cutting machine would do. Via the optimum route the algorithm follows a determined pattern downward until no further "blocks" remain. The algorithm ensures here that as many mutually adjacent "blocks" as possible at the same level or one level lower are included. The algorithm calculates the optimum route here. This will generally be the "shortest route". The algorithm is similar here to algorithms used in route planners for vehicles, and which determine the shortest route between a place of departure and a final destination.

Each time the drag head passes over a determined matrix block the information in this matrix block is modified with the remaining number of passages, which in principle is one less than the previous number of passages (in its simplest form of calculation). It is also possible to wholly recalculate the information in a matrix block in accordance with the foregoing principle, wherein new depth information from the sounding depth of the drag head and other parameters (visor position, navigating speed, ...) are taken into account on the basis of knowledge of the excavation principle of a drag head.

The optimum route for navigation is visualized on a screen and can serve as input for the crew member or for the DPDT system. Individual characteristics of a vessel, such as for instance the tightest bend the trailing suction hopper dredger can take, are used as boundary condition in the calculation of the optimum route. It is also possible to take account of other boundary conditions. It is thus possible for instance to aim to include as many straight navigation lines as possible in the optimum route and the fewest possible (tight) bends. When bends are being negotiated, dredging must after all be interrupted and the drag pipe raised in order to ensure that it does not come to lie under the dredging vessel or does not move too far away from the dredging vessel. The programming code ensures that the matrix is repeatedly updated with the actually navigated route. This is particularly important when the trailing suction hopper dredger is controlled by an operator. Although this latter will attempt to follow as accurately as possible the optimum route calculated by the computer, he will not always be successful in doing so due to chance causes such as current, other shipping or because the optimum route has a high degree of difficulty. The optimization algorithm is preferably adapted such that a minimum number of passages of the drag head take place over matrix blocks which have already been visited (in other words, have already been deepened) by the drag head. One of the implications hereof is that when the zone is almost finished as many mutually adjacent "blocks" as possible are broken off and no interruptions occur between the "blocks".

Although the device and method according to the invention have been described above with reference to an exemplary application relating to dredging with a trailing suction hopper dredger, the same principle can for instance be applied for displacing ground with a bulldozer. In such an embodiment of the invention the height of the cutting edge of the bulldozer blade is measured, and the position of the bulldozer by position determination. Other than a trailing suction hopper dredger, a bulldozer has the feature that it pushes the soil before it and so displaces it instead of removing it. If for instance a horizontally flat height profile has to be delivered, the optimum route is then determined such that each matrix block of the above discussed matrix has the same value at the end of the route. Some matrix blocks will after all increase in value as the bulldozer follows the route because soil has to be deposited in such blocks in order to be able to achieve the final flat level.

## Claims

1. Method for controlling a mobile ground working device, **characterized in that** it comprises at least the following steps, proceeding under the control of a central computer via a digital network, of:
A) presetting an optimum criterion;
B) collecting information relating to the current state of the ground;
C) collecting information relating to the current state of the ground working device, including at least its position;
D) calculating the control of the ground working device at which the optimum criterion is minimized,
wherein the optimum criterion relates to the route which the ground working device has to cover in order to convert the current state of the ground to a desired state of the ground; and/or the ground working device loads soil, and the optimum criterion relates to the distance over which the ground working device has to be displaced in full state to a discharge location for the load.

2. Method as claimed in claim 1, **characterized in that** calculation of the control comprises of at least calculating the route of the ground working device.

3. Method as claimed in claim 1 or 2, **characterized in that** the information relating to the current state of the ground comprises the height profile of the ground.

4. Method as claimed in claim 3, **characterized in that** the information relating to the height profile of the ground is visualized digitally for the operator of the ground working device.

5. Method as claimed in any of the foregoing claims, **characterized in that** the current position of the ground working device is determined by a GPS system.

6. Method as claimed in any of the foregoing claims, **characterized in that** the information relating to the current state of the ground working device comprises the working depth and width.

7. Method as claimed in any of the foregoing claims, **characterized in that** the information relating to the current state of the ground working device comprises the quantity of worked ground.

8. Method as claimed in any of the foregoing claims, **characterized in that** the ground working device comprises a dredging vessel, a bulldozer or a grass mower.

9. Method as claimed in claim 8, **characterized in that** the ground working device comprises a trailing suction hopper dredger.

10. Computer program which comprises program instructions for having a computer perform the method as claimed in any of the claims 1-9.

11. Computer program as claimed in claim 10, **characterized in that** the computer program is arranged on a physical carrier.

12. Computer program as claimed in claim 10, **characterized in that** the computer program is at least partially stored in a computer memory.

13. Computer adapted to run a computer program as claimed in any of the claims 10-12.

## Patentansprüche

1. Verfahren zur Steuerung eines mobilen Bodenbearbeitungsgeräts, **dadurch gekennzeichnet, dass** es mindestens die folgenden Schritte umfasst und dabei durch Steuerung eines zentralen Computers über ein digitales Netz arbeitet:
A) Voreinstellen eines optimalen Kriteriums;
B) Sammeln von Informationen bezüglich des derzeitigen Bodenzustands;
C) Sammeln von Informationen bezüglich des derzeitigen Zustands des Bodenbearbeitungsgeräts, wobei mindestens seine Position vorhanden sein muss;
D) Berechnen der Steuerung des Bodenbearbeitungsgeräts, bei der das optimale Kriterium minimiert wird,
wobei sich das optimale Kriterium auf die Route bezieht, die das Bodenbearbeitungsgerät zurücklegen muss, um den Bodenistzustand des Bodens in einen Bodensollzustand umzuwandeln; und/oder das Bodenbearbeitungsgerät Erde lädt, und das optimale Kriterium sich auf die Entfernung bezieht, über die das Bodenbearbeitungsgerät in vollem Zustand zu einem Abladeort für die Ladung bewegt werden muss.

2. Verfahren nach Anspruch 1, **dadurch gekennzeichnet, dass** die Berechnung der Steuerung mindestens die Berechnung der Route des Bodenbearbeitungsgeräts umfasst.

3. Verfahren nach Anspruch 1 oder 2, **dadurch gekennzeichnet, dass** die Informationen bezüglich dem derzeitigen Zustand des Bodens das Höhenprofil des Bodens umfassen.

4. Verfahren nach Anspruch 3, **dadurch gekennzeichnet, dass** die Informationen bezüglich des Höhenprofils des Bodens für den Bediener des Bodenbearbeitungsgeräts digital visualisiert werden.

5. Verfahren nach jedem der oben genannten Ansprüche, **dadurch gekennzeichnet, dass** die aktuelle Position des Bodenbearbeitungsgeräts von einem GPS-System bestimmt wird.

6. Verfahren nach jedem der oben genannten Ansprüche, **dadurch gekennzeichnet, dass** die Informationen bezüglich der aktuellen Position des Bodenbearbeitungsgeräts die Arbeitstiefe und -breite umfassen.

7. Verfahren nach jedem der oben genannten Ansprüche, **dadurch gekennzeichnet, dass** die Informationen bezüglich des aktuellen Zustands des Bodenbearbeitungsgeräts die Menge des bearbeiteten Bodens umfassen.

8. Verfahren nach jedem der oben genannten Ansprüche, **dadurch gekennzeichnet, dass** das Bodenbearbeitungsgerät ein Baggerfahrzeug, eine Planierraupe oder einen Rasenmäher umfasst.

9. Verfahren nach Anspruch 8, **dadurch gekennzeichnet, dass** das Bodenbearbeitungsgerät einen nachlaufenden Saugbagger umfasst.

10. Computerprogramm, das Programmbefehle umfasst, die einen Computer das Verfahren nach jedem der Ansprüche 1 bis 9 durchführen lassen.

11. Computerprogramm nach Anspruch 10, **dadurch gekennzeichnet, dass** das Computerprogramm auf einem physikalischen Träger angeordnet ist.

12. Computerprogramm nach Anspruch 10, **dadurch gekennzeichnet, dass** das Computerprogramm mindestens teilweise in einem Computerspeicher gespeichert ist.

13. Computer, der so angepasst ist, dass er ein Computerprogramm gemäß jedem der Ansprüche 10-12 ausführen kann.

## Revendications

1. Procédé de commande d'un dispositif mobile de traitement du sol, **caractérisé en ce qu'**il comprend au moins les étapes suivantes, se déroulant sous le contrôle d'un ordinateur central par l'intermédiaire d'un réseau numérique, consistant :
A) à prédéfinir un critère optimal ;
B) à collecter des informations relatives à l'état actuel du sol ;
C) à collecter des informations relatives à l'état actuel du dispositif de traitement du sol, incluant au moins sa position ;
D) à calculer la commande du dispositif de traitement du sol pour laquelle le critère optimal est minimalisé,
étant entendu que le critère optimal est relatif au trajet que le dispositif de traitement du sol doit couvrir afin de convertir l'état actuel du sol en un état recherché du sol, et/ou que le dispositif de traitement du sol charge des terres, et que le critère optimal est relatif à la distance sur laquelle le dispositif de traitement du sol doit être déplacé à l'état rempli jusqu'à un site de déchargement de la charge.

2. Procédé selon la revendication 1, **caractérisé en ce que** le calcul de la commande consiste au moins à calculer le trajet du dispositif de traitement du sol.

3. Procédé selon la revendication 1 ou 2, **caractérisé en ce que** les informations relatives à l'état actuel du sol comprennent le profil des hauteurs du sol.

4. Procédé selon la revendication 3, **caractérisé en ce que** les informations relatives au profil des hauteurs du sol sont visualisées numériquement pour l'opérateur du dispositif de traitement du sol.

5. Procédé selon l'une quelconque des revendications précédentes, **caractérisé en ce que** la position actuelle du dispositif de traitement du sol est déterminée par un système de géolocalisation (GPS).

6. Procédé selon l'une quelconque des revendications précédentes, **caractérisé en ce que** les informations relatives à l'état actuel du dispositif de traitement du sol comprennent la profondeur et la largeur de traitement.

7. Procédé selon l'une quelconque des revendications précédentes, **caractérisé en ce que** les informations relatives à l'état actuel du dispositif de traitement du sol comprennent la quantité de sol traité.

8. Procédé selon l'une quelconque des revendications précédentes, **caractérisé en ce que** le dispositif de traitement du sol consiste en un bâtiment de dragage, un bouteur ou une tondeuse à gazon.

9. Procédé selon la revendication 8, **caractérisé en ce que** le dispositif de traitement du sol consiste en une drague suceuse porteuse à élinde traînante.

10. Programme informatique qui comprend des instructions de programme pour faire exécuter par un ordinateur le procédé selon l'une quelconque des revendications 1-9.

11. Programme informatique selon la revendication 10, **caractérisé en ce que** le programme informatique est agencé sur un support physique.

12. Programme informatique selon la revendication 10, **caractérisé en ce que** le programme informatique est au moins partiellement stocké dans une mémoire informatique.

13. Ordinateur adapté pour exécuter un programme informatique selon l'une quelconque des revendications 10-12.
